# FASCICULE DE BREVET EUROPEEN

(11) **EP 2 453 540 B1**
(45) Date de publication et mention de la délivrance du brevet: **22.05.2013**
(21) Numéro de dépôt: 11188686.7
(22) Date de dépôt: 10.11.2011
(51) Int. Cl.: H02G 3/04, H02G 3/32

(54) **Rail de support universel**
Universalhalterungssschiene
Universal support rail

(30) Priorité: 12.11.2010 FR 1004411
(43) Date de publication de la demande: 16.05.2012
(73) Titulaire: Legrand France, 87000 Limoges (FR); Legrand SNC, 87000 Limoges (FR)
(72) Inventeur: Decore, Raphaël, 72140 SILLE LE GUILLAUM (FR)
(74) Mandataire: Lepelletier-Beaufond, François

(56) Documents cités:
- EP-A1- 0 751 598
- EP-A1- 1 471 616
- EP-A1- 1 736 075

## Description

La présente invention concerne un rail de support universel, et plus particulièrement un rail utilisé pour le support d'un chemin de câbles, notamment un chemin de câbles en fils.

Il existe de nombreux dispositifs qui permettent de réaliser le supportage de chemins de câbles en fils. Ces dispositifs sont adaptés à la manière dont on souhaite monter le chemin de câbles en fils, en fonction notamment de la configuration de l'espace à l'intérieur duquel les câbles doivent être posés.

Ainsi par exemple, lorsque le chemin de câbles en fils doit être suspendu à un plafond, il est par exemple connu d'utiliser un pendard. Celui-ci est alors fixé au plafond et reçoit une ou plusieurs consoles servant de support au chemin de câbles. Le pendard est une pièce métallique profilée qui présente généralement une plaque de tête permettant sa fixation à l'aide de vis au plafond. Une colonne s'étend alors de ce pendard comme illustré par exemple dans le document EP-1 471 616.

Lorsque le chemin de câbles est par exemple fixé le long d'un mur vertical, il est alors connu d'utiliser des consoles. Le document EP-0 741 828 illustre (figure 3) un exemple de montage d'un chemin de câbles en fils sur une console.

Le document EP-1 736 075 révèle un élément adapté pour être installé sur un montant d'un dispositif de support et comprenant au moins un crochet à même d'être inséré dans un trou traversant du montant. L'élément comporte en outre un doigt de verrouillage apte à être basculé entre une première position, dans laquelle ce doigt de verrouillage ne s'oppose pas au montage de l'élément sur le montant par accrochage du crochet, et une deuxième position, dans laquelle le doigt de verrouillage est à même d'empêcher le décrochage du crochet en pénétrant dans un trou du montant. La figure 1 de ce document illustre l'utilisation d'un tel dispositif de support pour le supportage d'un chemin de câbles en fils. On remarque toutefois que le dispositif de support comporte, d'une part, des montants et, d'autre part, des éléments de forme distincte de celle des montants. Les possibilités de montage avec un dispositif support révélé par ce document sont certes multiples mais tout de même limitées.

D'autres types de montage existent pour recevoir des chemins de câbles en fils. Il existe des solutions pour réaliser le supportage de chemin de câbles en fils dans toutes les situations pouvant se présenter dans le monde industriel ou tertiaire. Il existe ainsi une multitude de dispositifs qui sont adaptés à une situation donnée et qui sont généralement bien moins adaptés, ou pas du tout adaptés, à une autre situation.

La présente invention a alors pour but de fournir un dispositif permettant le supportage de chemins de câbles en fils adapté à la plupart des cas de montage habituellement rencontrés pour réaliser le supportage de chemins de câbles en fils.

L'idée est ici de fournir à un installateur des moyens qui lui permettent dans toutes les configurations possibles (ou quasiment toutes) de poser un chemin de câbles en fils sans avoir à prévoir au préalable, en particulier lors de la commande des produits, les divers dispositifs (consoles, pendards, ...) dont il aura besoin.

À cet effet, la présente invention propose un rail de support présentant une forme allongée définissant une direction longitudinale, de section sensiblement rectangulaire avec une première face dite face de support, une seconde face opposée à la première et dite face de fixation, deux faces latérales reliant la face de support à la face de fixation, et deux faces d'extrémité.

Selon la présente invention, chaque face latérale porte au niveau d'au moins une face d'extrémité au moins un crochet s'étendant vers l'extérieur du rail selon la direction longitudinale du rail, formant ainsi une paire de crochets, et au moins une face parmi la face de support, la face de fixation et les faces latérales porte au moins une paire de lumières dimensionnées et disposées de telle sorte qu'elles puissent coopérer avec une paire de crochets d'un rail de support similaire.

En assemblant plusieurs rails de ce type, il est possible de réaliser un grand nombre de montages pouvant servir de support à des chemins de câbles, notamment des chemins de câbles en fils. La face de fixation d'un rail peut venir se fixer sur une surface support, telle un sol, un plafond ou une paroi verticale. Un autre rail, ou tronçon de rail, peut ensuite s'étendre perpendiculairement au premier rail et servir soit de support à un tronçon de chemin de câbles, soit à un autre tronçon de rail qui recevra à son tour un tronçon de chemin de câbles.

Une forme de réalisation avantageuse prévoit que les crochets sont en forme de L et sont reliés à la face latérale correspondante par une patte repliée de telle sorte que le crochet en forme de L s'étende dans un plan sensiblement parallèle aux faces latérales mais décalé vers l'intérieur du rail de support. De cette manière, il est possible de prévoir des lumières s'étendant selon une direction longitudinale dans la face de support et dans la face de fixation d'un rail selon l'invention.

Une autre forme de réalisation avantageuse d'un rail selon la présente invention prévoit que les crochets sont en forme de L et sont reliés à la face latérale correspondante en étant disposés dans un plan incliné par rapport à la face latérale correspondante et de manière à converger vers l'autre face latérale. Avec une telle forme de réalisation, il est possible éventuellement, selon la configuration des lumières, de monter sur un premier rail support, à un même niveau, deux rails similaires au premier rail sur deux faces voisines, par exemple une face latérale et la face de fixation.

Pour augmenter les possibilités de montage, il est avantageux que chaque face d'extrémité présente au moins une paire de crochets.

Dans une forme de réalisation compacte, le rail est avantageusement de section sensiblement carrée. Dans une telle forme de réalisation, une lumière s'étendant longitudinalement d'une face peut être regroupée avec une lumière s'étendant longitudinalement d'une face voisine de manière à ne former qu'une seule lumière à cheval sur une arête de liaison, éventuellement arrondie, entre lesdites faces.

Une forme de réalisation préférée de la présente invention prévoit que chaque face latérale porte entre les deux faces d'extrémité au moins une découpe à partir d'au moins un bord de laquelle est rattaché un crochet semblable à un crochet se trouvant sur la même face latérale au niveau d'une face d'extrémité. De cette manière, le rail peut être coupé à longueur, au niveau de certaines sections définies par la position des découpes, tout en présentant encore des crochets à l'extrémité coupée. Dans une variante de réalisation, le rail de support est avantageusement tel que chaque face latérale comporte plusieurs découpes à partir d'au moins un bord de chacune desquelles est rattaché un crochet et tel que le rail de support présente des paires de lumières réparties longitudinalement selon un premier pas, et tel que les découpes précitées sont réparties longitudinalement selon un second pas, multiple du premier pas. Cette variante de réalisation permet de régulièrement monter un premier rail support sur un autre rail support.

Pour faciliter l'accès à la face de fixation et ainsi faciliter la fixation du rail sur une surface support, la face de support est par exemple une face ouverte longitudinalement, le rail de support présentant ainsi une forme générale d'un profilé en C dans laquelle chaque face latérale est repliée d'au moins 90° à son extrémité libre vers l'intérieur du profilé en formant un rebord. Selon cette forme de réalisation, on prévoit avantageusement aussi que la face de support présente de part et d'autre de l'ouverture longitudinale un profil canal avec une paroi dorsale entre deux ailes, en ce que chaque profil canal présente des encoches dite de supportage répétées selon la longueur du profil canal avec un pas régulier, lesdites encoches de supportage étant découpées à cheval sur les arêtes de la paroi dorsale, c'est-à-dire tant dans la paroi dorsale que partiellement dans les deux ailes de manière à ménager dans la paroi dorsale à l'aplomb de chaque encoche de supportage une languette unique. Ces caractéristiques sont particulièrement bien adaptées au montage sur la face de support d'un chemin de câbles en fils.

Pour faciliter la fixation d'un rail selon la présente invention sur un support par vissage, la face de fixation présente par exemple des trous de fixation, par exemple des trous de fixation oblongs.

Enfin, la présente invention concerne également un ensemble formé d'au moins deux rails de support tels que décrits ci-dessus, les crochets d'un rail de support étant introduits dans des lumières correspondantes de l'autre rail de support.

Des détails et avantages de la présente invention ressortiront mieux de la description qui suit, faite en référence aux dessins schématiques annexés sur lesquels :
La figure 1 est une vue en perspective d'une première forme de réalisation d'un rail de support selon la présente invention,
La figure 2 est une vue de côté du rail montré sur la figure 1,
La figure 3 est une vue de dessus du rail des figures 1 et 2,
La figure 4 est une vue de face du rail montré sur les figures 1 à 3,
La figure 5 montre une variante de réalisation du rail montré sur la figure 1,
La figure 6 est une autre vue en perspective d'une troisième forme de réalisation d'un rail selon la présente invention,
La figure 7 illustre le montage d'un chemin de câbles en fils sur un rail selon la présente invention, et
La figure 8 illustre des montages réalisés à l'aide de rails selon une autre variante de réalisation d'un rail de support selon l'invention.

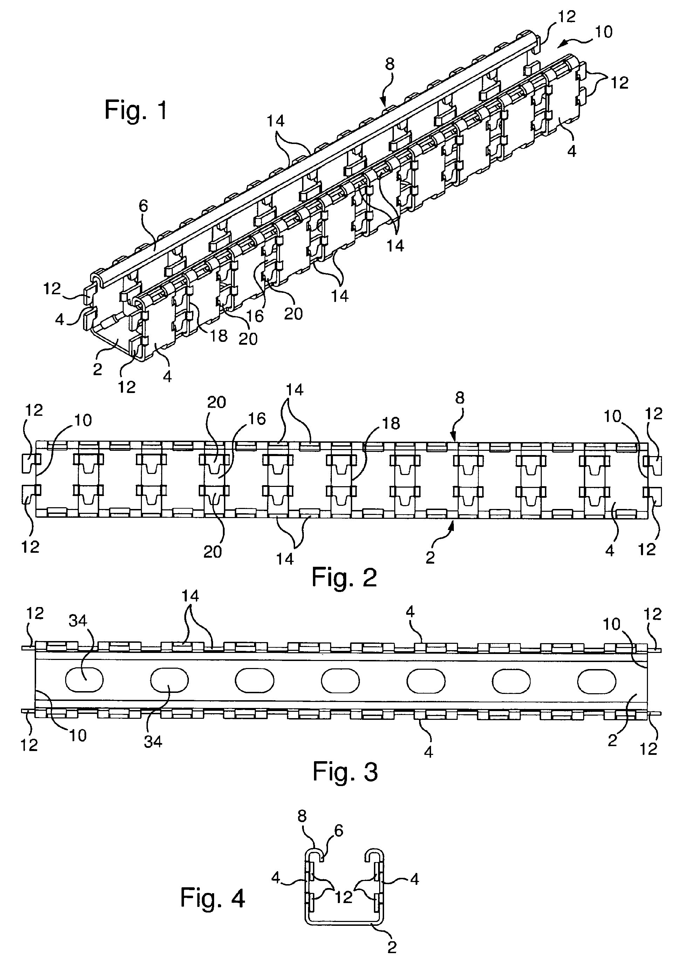

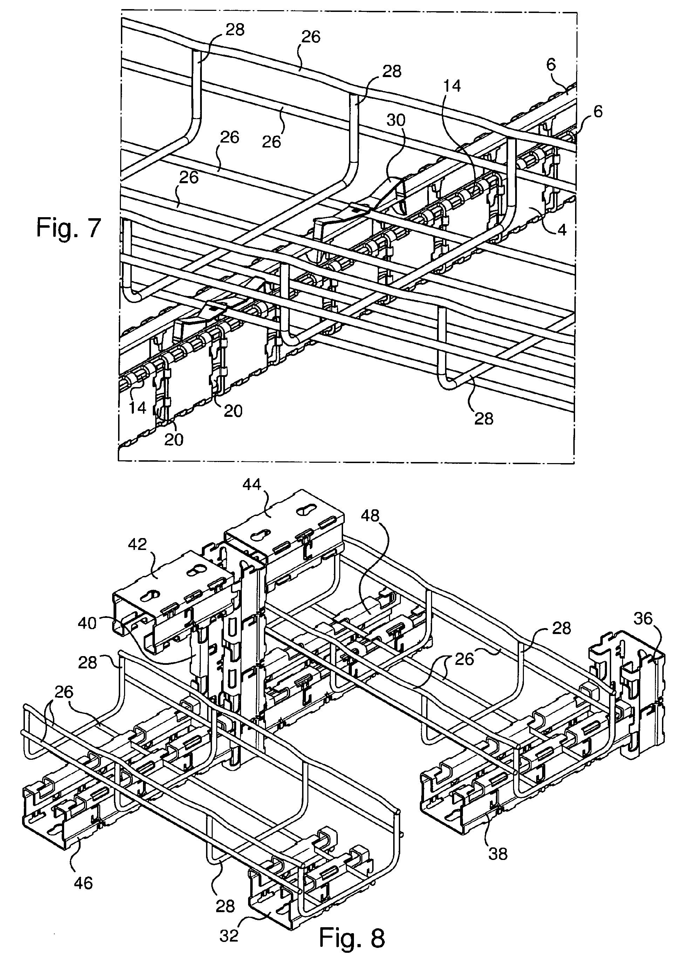

Les figures 1 à 4 illustrent une première forme de réalisation d'un rail selon l'invention. Ce rail est réalisé à partir d'un profilé dont la forme générale est une forme classique en C. Ce profilé a une forme allongée avec un axe longitudinal définissant une direction longitudinale et présente un fond appelé par la suite face de fixation 2. De ce fond s'étendent deux branches latérales qui seront appelées par la suite faces latérales 4. Chaque face latérale 4 est repliée de 180° à son extrémité libre vers l'intérieur du profilé formant ainsi à chaque fois un rebord 6. Ces rebords 6 peuvent notamment servir pour recevoir un chemin de câbles en fils (comme illustré sur la figure 7). On peut ainsi définir entre ces deux rebords 6 et au niveau de ceux-ci une face dite face de support 8. Cette dernière est entièrement ouverte dans cette forme de réalisation.

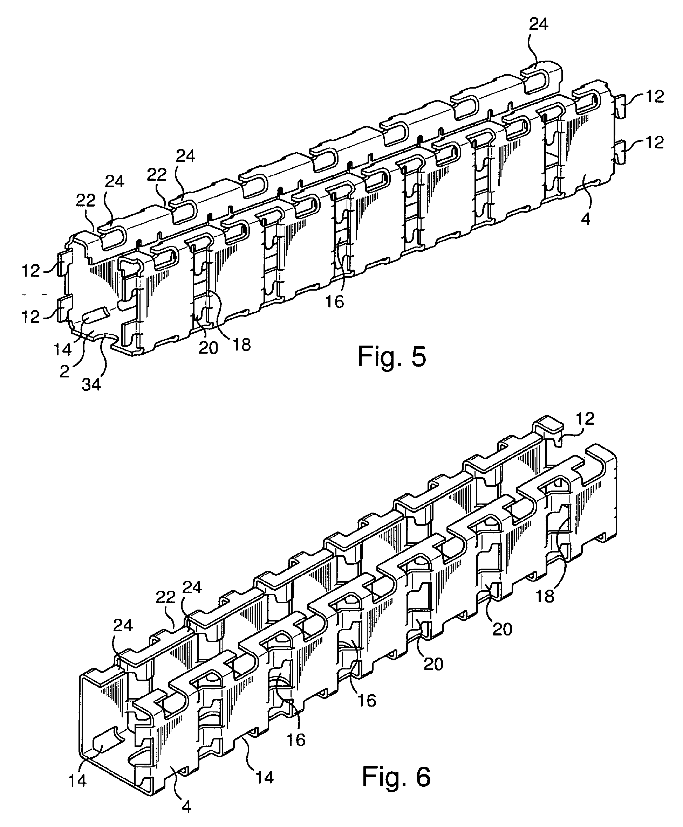

De manière générale, la section du profilé est rectangulaire. Ainsi, les faces latérales 4 s'étendent perpendiculairement à la face de fixation 2. Les figures illustrent uniquement des formes de réalisation préférées pour lesquelles la section du profilé est sensiblement carrée, c'est-à-dire que la hauteur des faces latérales 4 correspond sensiblement à la largeur de la face de fixation 2. Les rebords quant à eux sont facultatifs. Toutefois, l'homme du métier sait que de tels rebords permettent de rigidifier la structure du profilé. Ces rebords ne sont pas forcément repliés à 180° (cf. figure 6). Pour des raisons mécaniques, il apparaîtra à l'homme du métier qu'il est préférable d'avoir un pli, ou plusieurs plis successifs, permettant de former un angle d'au moins 90° au niveau du rebord. Ainsi, pour former un rebord à 180°, on peut avoir ici deux plis à 90° comme par exemple sur la forme de réalisation de la figure 5.

Un rail selon la présente invention est par exemple réalisé à partir d'une tôle d'acier galvanisée à chaud. D'autres matériaux pourraient être envisagés (métalliques tels par exemple des alliages à base d'aluminium mais aussi des matières telles des matières synthétiques) mais la présente description est faite en référence uniquement à des rails réalisés à partir de tôles métalliques.

À partir d'un rail brut en C tel que défini ci-dessus, avec une face de fixation 2, des faces latérales 4 et éventuellement des rebords 6, il est prévu de réaliser quelques découpes et des emboutissages/pliages pour obtenir un rail de support selon la présente invention.

Chaque rail profilé présente deux extrémités et le plan contenant l'extrémité des faces latérales 4 et de la face de fixation 2 forme à chaque fois une face d'extrémité 10.

On remarque, pour la forme de réalisation des figures 1 à 4, la présence de deux crochets 12 sur chaque face latérale 4 au niveau de chacune des faces d'extrémité 10.

Chaque crochet 12 se présente sous la forme d'une petite équerre. Une première branche de l'équerre est rattachée à la face latérale 4 correspondante tandis que l'autre branche de l'équerre s'étend à partir de la première branche vers la face de fixation 2. Comme illustré parmi les différents modes de réalisation sur les dessins, le crochet 12 ne s'étend pas forcément dans le prolongement d'une face latérale 4. Il est de préférence décalé vers l'intérieur du profilé. La première branche de l'équerre réalise alors un décrochement de telle sorte que l'extrémité de la première branche qui porte la seconde branche et la seconde branche de l'équerre se trouvent dans un plan sensiblement parallèle à la face latérale 4 correspondante.

En variante, les crochets peuvent être aussi simplement orientés vers l'intérieur du profilé, c'est-à-dire que deux crochets 12 réalisés sur deux faces latérales opposées au niveau d'une même face d'extrémité sont convergents, en faisant toutefois saillie longitudinalement vers l'extérieur du profilé. Ceci est illustré par exemple sur la figure 6.

Le nombre de crochets 12 peut varier d'une forme de réalisation à l'autre. On peut également prévoir de n'avoir des crochets 12 qu'au niveau d'une seule face d'extrémité 10.

Au niveau d'une face d'extrémité 10, les crochets 12 sont montés symétriquement par rapport à un plan de symétrie du profilé, perpendiculaire à la face d'extrémité 10 correspondante. Si des crochets 12 sont prévus aux deux extrémités du profilé, c'est-à-dire au niveau de chacune des faces d'extrémité 10, on prévoit alors d'avoir également une symétrie des crochets 12 par rapport à un plan de symétrie du profilé parallèle aux faces d'extrémités 10, à mi-longueur du profilé.

Les crochets 12 sont destinés à coopérer avec des fentes 14. Ces dernières s'étendent longitudinalement par rapport à l'axe longitudinal du profilé.

Selon une variante non représentée, d'autres fentes pourraient s'étendre transversalement par rapport à l'axe longitudinal du profilé, permettant l'association de plusieurs rails de support présentant leur face de support tournée vers le haut.

Dans la forme de réalisation des figures 1 à 4, il a été prévu des fentes sur chacune des quatre faces principales du rail, c'est-à-dire la face de support 8, la face de fixation 2 et les faces latérales 4. Il s'agit ici d'une forme de réalisation préférée car elle permet de venir accrocher un rail profilé sur les quatre faces principales d'un rail profilé du même type.

Pour limiter le nombre de découpes, il est également prévu dans la forme de réalisation des figures 1 à 4 de regrouper les fentes 14 deux à deux. Ainsi, les fentes 14 sont regroupées au niveau de la jonction entre les faces. Les fentes se trouvent ainsi à la jonction entre la face de support 8 et une face latérale 4 ou à la jonction entre une face latérale 4 et la face de fixation 2. Tous ces regroupements sont autorisés par la section sensiblement carrée du rail.

Dans la forme de réalisation des figures 1 à 4, dans laquelle une même face latérale porte deux crochets 12 à chacune de ses extrémités, le pas séparant deux fentes 14 voisines est le même que celui séparant deux crochets 12 voisins.

On remarque en outre sur les figures 1 et 2 que des découpes 16 sont régulièrement réalisées dans chaque face latérale 4. Chaque découpe 16 s'étend depuis la face de fixation 2 jusqu'à la face de support 8. Ces découpes 16 s'étendent transversalement par rapport à la face latérale 4 correspondante. Chaque découpe 16 présente ainsi deux bords 18 parallèles. Ces bords sont reliés par deux fois par un pont de matière 20 en forme de T. Ce pont de matière 20 présente ainsi une barre transversale -correspondant à la barre transversale du T- s'étendant parallèlement à la face de fixation 2 et à la face de support 8. La barre verticale -correspondant à la barre verticale du T- du pont de matière 20 s'étend à partir de la barre transversale du T en direction de la face de fixation 2.

La forme du pont de matière 20 est réalisée en fonction de la forme des crochets 12 (ou inversement). Chaque demi-branche transversale du pont de matière 20 correspond sensiblement à une première branche d'un crochet 12 tandis que la barre verticale du pont de matière 20 correspond à une seconde branche d'un crochet 12 en forme d'équerre comme expliqué plus haut.

Dans la forme de réalisation des figures 1 à 4, on remarque que les ponts de matière 20 sont alignés sur deux rangées. À chacune de ces rangées correspondent également deux crochets 12.

L'idée de la présente invention est ici de pouvoir réaliser une découpe à longueur qui permette de recréer des crochets au niveau de la nouvelle face d'extrémité ainsi réalisée.

Dans la variante de réalisation des figures 1 à 4, on remarque que les découpes 16 sont réalisées à chaque fois entre deux fentes 14. Dans cette forme de réalisation, le pas séparant les découpes 16 est le double du pas séparant les fentes 14. Un autre pas pourrait être choisi ici, comme par exemple illustré sur la figure 7.

La forme de réalisation de la figure 5 reprend sensiblement les mêmes caractéristiques que celles des figures 1 à 4. Ici, la différence se situe au niveau des rebords 6. Dans cette forme de réalisation, le rail support est configuré comme un élément porteur pour chemin de câbles tel que décrit et revendiqué dans le brevet EP-0 741 828. Il est ici fait référence à ce brevet pour la description de la face de support 8 de cette forme de réalisation. Ici, chaque rebord est conformé en profil canal dans lequel sont réalisées des encoches de supportage 22. Ces encoches sont répétées selon la longueur du profil canal avec un pas qui correspond ici au double du pas prévu pour les fentes 14. On a alors ici une interaction entre le pas choisi pour séparer les encoches de supportage 22 et le pas séparant les crochets 12 et donc les fentes 14. Il faut ici que le pas séparant les encoches de supportage 22 corresponde à l'intervalle de répétition des fils utilisés pour former un fond de chemin de câbles en fils.

Les encoches de supportage 22 sont découpées à cheval au niveau du profil canal c'est-à-dire qu'elles sont réalisées tant dans la paroi dorsale dudit profil canal que dans ses deux ailes latérales. Ces encoches de supportage sont découpées de manière à ménager dans la paroi dorsale du profil canal, à l'aplomb de chaque encoche de supportage, une languette 24 unique, limitée en longueur et en largeur, pour permettre l'engagement de composants longilignes d'un tronçon de chemin de câbles et être rabattables autour dudit composant longiligne lorsque celui-ci est engagé dans l'encoche de supportage.

La figure 6 montre une autre variante de réalisation d'un rail de support selon la présente invention. Cette variante de réalisation est basée sur la variante de réalisation illustrée sur la figure 5. Ici, du côté de la face de support 8, l'extrémité de chaque face latérale 4 est repliée uniquement à 90°. Ici, on retrouve également des encoches de supportage 22. Celles-ci sont réalisées par découpe au niveau de la face de support 8 et de la face latérale 4 correspondantes. Une languette 24 est également prévue. Celle-ci se trouve, comme dans la forme de réalisation de la figure 5, dans le plan de la face de support 8.

Une autre différence concerne les crochets 12 et donc aussi les ponts de matière 20. Ici, le crochet 12 est sensiblement plan. Il est disposé à l'extrémité d'une face latérale 4, en étant incliné par rapport à cette face latérale. Ainsi, la forme des ponts de matière 20 correspond à deux crochets mis côte à côte en formant un V. Le pont de matière 20, dans cette forme de réalisation, correspond à deux crochets complets, ce qui n'est pas le cas dans les formes de réalisation des figures 1 à 5. Dans la forme de réalisation de cette figure 6, un élément dont la forme correspond à celle d'un crochet 12 s'étend à partir de chaque bord 18 d'une découpe 16 pour se rejoindre au centre de la découpe en formant un pont de matière 20.

L'inclinaison des crochets permet avantageusement le montage juxtaposé des rails sur un premier rail, à partir d'au moins deux faces longitudinales adjacentes dudit premier rail et au même niveau, sans interférence entre les crochets des rails montés sur le premier rail. Ce mode de pose permet la réalisation simple et pratique de supportages en angle. Lorsqu'un rail de support selon l'invention présentant des découpes 16 est coupé en deux tronçons de rail, le rail est de préférence sectionné au niveau d'une découpe 16. Dans les formes de réalisation des figures 1 à 5, après tronçonnage du rail, au niveau du plan de coupe, l'un des tronçons présentera des crochets 12 et l'autre non. Par contre pour la forme de réalisation de la figure 6, en tronçonnant le rail au milieu de ponts de matière 20, on obtient au niveau du plan de coupe des crochets 12 de part et d'autre de ce plan de coupe.

On peut toutefois remarquer que dans les formes de réalisation des figures 1 à 5, s'il est souhaité d'avoir des crochets de part et d'autre du plan de coupe, c'est-à-dire obtenir deux tronçons de rail présentant chacun des crochets au niveau des deux faces d'extrémité, il suffit de réaliser un second tronçonnage au niveau de la découpe 16 du tronçon de rail se trouvant juste au voisinage de la face d'extrémité sans crochets pour obtenir également des crochets à l'extrémité du tronçon de rail qui en était dépourvue.

La figure 7 illustre le montage d'un tronçon de chemin de câbles en fils sur un profilé du type de celui montré sur les figures 1 à 4. La différence entre le rail profilé montré sur la figure 7 et celui des figures 1 à 4 est que le pas entre deux découpes 16 est le triple du pas prévu pour les fentes 14 (alors qu'il est le double du pas prévu pour les fentes 14 sur les figures 1 à 4). Il s'agit, au moment du dépôt de la présente demande de la forme de réalisation préférée de la présente invention.

De manière connue de l'homme du métier, la figure 7 montre un tronçon de chemin de câbles qui comporte des fils longitudinaux appelés fils de chaîne 26, reliés entre eux par des fils transversaux, appelés également fils de trame 28. De manière classique, et connue de l'homme du métier, les fils de trame sont en forme en U définissant ainsi pour le tronçon de chemin de câbles un fond et des ailes latérales.

La figure 7 illustre alors le montage d'un tronçon de chemin de câbles sur un rail support selon la présente invention à l'aide de deux dispositifs de fixation 30. Il est fait référence ici au document FR-2 852 157 pour ce qui concerne la description de ces dispositifs de fixation 30. On réalise ici un montage similaire au montage illustré sur la figure 5 de ce document de l'art antérieur.

La figure 8 illustre des montages pouvant être réalisés à l'aide de tronçons de rails selon la présente invention. Cette figure illustre trois montages possibles mais d'autres montages peuvent encore être envisagés.

Le rail profilé utilisé ici est une variante du rail montré sur la figure 5. La différence est qu'il n'est ici prévu qu'un seul crochet 12 à chaque extrémité de chaque face latérale 4. Un premier tronçon 32 de rail profilé est par exemple utilisé pour la fixation d'un tronçon de chemin de câbles monté au sol. Dans ce cas, le premier tronçon est vissé sur le sol et vient ensuite supporter le tronçon de chemin de câbles. Pour le vissage au sol, la face de fixation est posée contre le sol. Des vis sont alors utilisées pour fixer la face de fixation 2, et donc le premier tronçon 32 correspondant sur le sol. Comme il ressort notamment de la figure 3, il peut être prévu de réaliser des trous oblongs 34 dans la face de fixation 2 pour faciliter le montage d'un tronçon de rail sur une surface plane. Les trous oblongs 34 sont par exemple régulièrement répartis le long d'une ligne médiane de la face de fixation 2. Bien entendu, la présence des ces trous oblongs est facultative et un autre agencement de trous, oblongs ou non, peut être envisagé.

Sur la droite de la figure 8, un deuxième tronçon 36 est associé à un troisième tronçon 38 pour réaliser une console permettant par exemple le supportage d'un tronçon de chemin de câbles le long d'une paroi verticale. Le deuxième tronçon 36 est par exemple fixé par vissage sur une paroi verticale en étant orienté lui aussi verticalement (axe du profilé utilisé pour réaliser le rail s'étendant verticalement).

Le troisième tronçon 38 s'étend quant à lui horizontalement. La face d'extrémité du troisième tronçon 38 porte des crochets 12 qui viennent coopérer avec les fentes 14 de la face de support 8 du deuxième tronçon 36 pour réaliser l'accrochage de ce troisième tronçon 38 sur le deuxième tronçon 36. Du fait de l'orientation des crochets 12, l'accrochage du troisième tronçon 38 sur le deuxième tronçon 36 se fait de telle sorte que la face de fixation 2 du troisième tronçon 38 se trouve en position inférieure par rapport à la face de support 8 qui est donc en position supérieure. Celle-ci peut alors accueillir le tronçon de chemin de câbles dont un ou plusieurs fils de chaînes 26 vient s'engager dans des encoches de supportage 22 du troisième tronçon 38. Le verrouillage est alors réalisé en rabattant au moins l'une des languettes 24 correspondantes.

La figure 8 montre également un assemblage de cinq tronçons de rail permettant notamment de réaliser la suspension de deux tronçons de chemin de câbles. Ce montage mettant en oeuvre cinq tronçons de rails comporte tout d'abord un quatrième tronçon 40 disposé verticalement. Ce tronçon est accroché à un cinquième tronçon 42 ainsi qu'à un sixième tronçon 44. Le cinquième tronçon 42 et le sixième tronçon 44 sont fixés à un plafond, leur face de fixation 2 se trouvant contre ledit plafond. Ce montage est de préférence réalisé par vissage en utilisant les trous oblongs 34 de la face de fixation 2 de chacun desdits tronçons de rail. Le cinquième tronçon 42 est monté dans l'alignement du sixième tronçon 44 en laissant toutefois un espace entre les deux tronçons dans lequel vient se placer l'extrémité supérieure du quatrième tronçon 40. Tels que représentés sur la figure 8, les crochets de la face d'extrémité du cinquième tronçon 42 viennent coopérer avec les fentes 14 de la face de support 8 du quatrième tronçon 40 vertical tandis que les crochets de la face d'extrémité du sixième tronçon 44 se trouvant du côté du cinquième tronçon 42 viennent coopérer avec les fentes prévues à cet effet dans la face de fixation 2 du quatrième tronçon 40 de rail vertical. On remarque que les crochets du cinquième tronçon 42 et du sixième tronçon 44 sont orientés dans le bon sens pour réaliser un bon supportage du quatrième tronçon 40. L'ensemble formé par le quatrième tronçon 40, le cinquième tronçon 42 et le sixième tronçon 44 forme l'équivalent d'un pendard duquel s'étend verticalement une échelle, suspente ou similaire.

Le quatrième tronçon 40 remplit aussi le rôle de colonne et porte un septième tronçon 46 et un huitième tronçon 48. Ces deux derniers tronçons remplissent alors le rôle de supports. À l'aide de leurs crochets, ils sont ici montés sur la face de fixation 2 et la face de support 8 du quatrième tronçon 40 vertical. On remarque que le septième tronçon 46 et le huitième tronçon 48 auraient également pu être disposés sur les faces latérales 4 du quatrième tronçon 40 de même que le quatrième tronçon 40 aurait pu être suspendu au cinquième tronçon 42 et au sixième tronçon 44 par ses faces latérales 4. La hauteur, par rapport au plafond, du septième tronçon 46 et du huitième tronçon 48 est réglable. Il est clair que, dans la mesure où l'on a deux tronçons, ceux-ci peuvent être fixés à des hauteurs différentes par rapport au quatrième tronçon 40.

Cette figure 8 illustre bien comment à l'aide d'un rail unique, un chemin de câbles peut être fixé sur un sol, sur une paroi verticale ou à un plafond. A l'aide des exemples fournis, l'homme du métier comprendra rapidement l'intérêt d'un rail support selon la présente invention. Un tel rail peut être découpé à longueur directement sur un chantier pour s'adapter aux différentes contraintes de montage. Pour réaliser l'installation d'un chemin de câbles, il suffit de prévoir une longueur suffisante de rails profilés. Les rails sont alors débités en tronçons, la longueur de chaque tronçon étant adaptée à son utilisation. Certains tronçons sont alors vissés sur la paroi servant de support et les autres tronçons sont simplement accrochés, directement ou indirectement, sur les tronçons de rails fixés sur la paroi support.

La présente invention ne se limite pas aux formes de réalisation décrites ci-dessus et illustrées sur les dessins annexés. Elle concerne également toutes les variantes de réalisation évoquées dans la description qui précède et toutes les variantes à la portée de l'homme du métier dans le cadre des revendications ci-après.

## Revendications

1. Rail de support présentant une forme allongée définissant une direction longitudinale, de section sensiblement rectangulaire avec une première face dite face de support (8), une seconde face opposée à la première et dite face de fixation (2), deux faces latérales (4) reliant la face de support (8) à la face de fixation (2), et deux faces d'extrémité (10),
**caractérisé en ce que** chaque face latérale (4) porte au niveau d'au moins une face d'extrémité (10) au moins un crochet (12) s'étendant vers l'extérieur du rail selon la direction longitudinale du rail, formant ainsi une paire de crochets (12),
**en ce qu'**au moins une face parmi la face de support (8), la face de fixation (2) et les faces latérales (4) porte au moins une paire de lumières (14) dimensionnées et disposées de telle sorte qu'elles puissent coopérer avec une paire de crochets (12) d'un rail de support similaire.

2. Rail de support selon la revendication 1, **caractérisé en ce que** les crochets (12) sont en forme de L et sont reliés à la face latérale (4) correspondante par une patte repliée de telle sorte que le crochet (12) en forme de L s'étende dans un plan sensiblement parallèle aux faces latérales (4) mais décalé vers l'intérieur du rail de support.

3. Rail de support selon la revendication 1, **caractérisé en ce que** les crochets (12) sont en forme de L et sont reliés à la face latérale (4) correspondante en étant disposés dans un plan incliné par rapport à la face latérale (4) correspondante de manière à converger vers l'autre face latérale (4).

4. Rail de support selon l'une des revendications 1 à 3, **caractérisé en ce que** chaque face d'extrémité (10) présente au moins une paire de crochets (12).

5. Rail de support selon l'une des revendications 1 à 4, **caractérisé en ce que** le rail est de section sensiblement carrée.

6. Rail de support selon la revendication 5, **caractérisé en ce qu'**une lumière (14) s'étendant longitudinalement d'une face est regroupée avec une lumière (14) s'étendant longitudinalement d'une face voisine de manière à ne former qu'une seule lumière (14) à cheval sur une arête de liaison, éventuellement arrondie, entre lesdites faces.

7. Rail de support selon l'une des revendications 1 à 6, **caractérisé en ce que** chaque face latérale (4) porte entre les deux faces d'extrémité (10) au moins une découpe (16) à partir d'au moins un bord (18) de laquelle est rattaché un crochet (12) semblable à un crochet (12) se trouvant sur la même face latérale au niveau d'une face d'extrémité.

8. Rail de support selon la revendication 7, **caractérisé en ce que** chaque face latérale comporte plusieurs découpes (16) à partir d'au moins un bord (18) de chacune desquelles est rattaché un crochet (12), **en ce que** le rail de support présente des paires de lumières (14) réparties longitudinalement selon un premier pas, et **en ce que** les découpes (16) précitées sont réparties longitudinalement selon un second pas, multiple du premier pas.

9. Rail de support selon l'une des revendications 1 à 8, **caractérisé en ce que** la face de support (8) est une face ouverte longitudinalement, le rail de support présentant ainsi une forme générale d'un profilé en C dans laquelle chaque face latérale (4) est repliée d'au moins 90° à son extrémité libre vers l'intérieur du profilé en formant un rebord (6).

10. Rail de support selon la revendication 9, **caractérisé en ce que** la face de support (8) présente de part et d'autre de l'ouverture longitudinale un profil canal avec une paroi dorsale entre deux ailes, **en ce que** chaque profil canal présente des encoches (22) dite de supportage répétées selon la longueur du profil canal avec un pas régulier, lesdites encoches de supportage (22) étant découpées à cheval sur les arêtes de la paroi dorsale, c'est-à-dire tant dans la paroi dorsale que partiellement dans les deux ailes de manière à ménager dans la paroi dorsale à l'aplomb de chaque encoche de supportage (22) une languette (24) unique.

11. Rail de support selon l'une des revendications 1 à 10, **caractérisé en ce que** la face de fixation (2) présente des trous de fixation (34).

12. Ensemble formé d'au moins deux rails de support selon l'une des revendications 1 à 11, les crochets (12) d'un rail de support étant introduits dans des lumières (14) correspondantes de l'autre rail de support.

## Patentansprüche

1. Halteschiene mit einer eine Längsrichtung beschreibenden länglichen Form, mit im Wesentlichen rechteckigem Querschnitt mit einer als Halteseite (8) bezeichneten ersten Seite, einer der ersten Seite entgegengesetzten, als Befestigungsseite (2) bezeichneten zweiten Seite, zwei Seitenflächen (4), die die Halteseite (8) und die Befestigungsseite (2) miteinander verbinden, und zwei Stirnseiten (10),
**dadurch gekennzeichnet, dass** jede Seitenfläche (4) an wenigstens einer Stirnseite (10) mit wenigstens einem Haken (12) versehen ist, der sich in Längsrichtung der Schiene außerhalb von dieser erstreckt, und somit ein Hakenpaar (12) bildet, und dass wenigstens eine Seite von Halteseite (8), Befestigungsseite (2) und Seitenflächen (4) mit wenigstens einem Paar Schlitzen (14) versehen ist, deren Größe und Anordnung solchermaßen ist, dass sie mit einem Hakenpaar (12) einer gleichartigen Halteschiene zusammenwirken können.

2. Halteschiene nach Anspruch 1,
**dadurch gekennzeichnet, dass** die Haken (12) L-förmig sind und mit der entsprechenden Seitenfläche (4) durch eine Lasche verbunden sind, die solchermaßen umgebogen ist, dass sich der L-förmige Haken (12) in einer zu den Seitenflächen (4) im Wesentlichen parallelen, jedoch zur Innenseite der Halteschiene versetzten Ebene erstreckt.

3. Halteschiene nach Anspruch 1,
**dadurch gekennzeichnet, dass** die Haken (12) L-förmig sind und mit der entsprechenden Seitenfläche (4) verbunden sind, indem sie in einer bezüglich der entsprechenden Seitenfläche (4) solchermaßen geneigten Ebene angeordnet sind, dass sie zur anderen Seitenfläche (4) hin weisen.

4. Halteschiene nach einem der Ansprüche 1 bis 3,
**dadurch gekennzeichnet, dass** jede Stirnseite (10) wenigstens ein Hakenpaar (12) aufweist.

5. Halteschiene nach einem der Ansprüche 1 bis 4,
**dadurch gekennzeichnet, dass** die Schiene einen im Wesentlichen quadratischen Querschnitt hat.

6. Halteschiene nach Anspruch 5,
**dadurch gekennzeichnet, dass** ein längs verlaufender Schlitz (14) einer Seite mit einem längs verlaufenden Schlitz (14) einer benachbarten Seite solchermaßen vereint ist, dass nur ein einziger Schlitz (14) beidseits einer gegebenenfalls abgerundeten Verbindungskante zwischen den Seiten gebildet ist.

7. Halteschiene nach einem der Ansprüche 1 bis 6,
**dadurch gekennzeichnet, dass** jede Seitenfläche (4) zwischen den beiden Stirnseiten (10) wenigstens mit einem Ausschnitt (16) versehen ist, von dessen wenigstens einem Rand (18) ausgehend ein Haken (12) angesetzt ist, der einem Haken (12) gleicht, der sich auf der gleichen Seitenfläche an einer Stirnseite befindet.

8. Halteschiene nach Anspruch 7,
**dadurch gekennzeichnet, dass** jede Seitenfläche mehrere Ausschnitte (16) aufweist, von deren wenigstens einem Rand (18) ausgehend ein Haken (12) angesetzt ist, dass die Halteschiene Schlitzpaare (14) aufweist, die in Längsrichtung mit einem ersten Abstand verteilt angeordnet sind, und dass die vorgenannten Ausschnitte (16) in Längsrichtung mit einem zweiten Abstand verteilt angeordnet sind, der einem Vielfachen des ersten Abstands entspricht.

9. Halteschiene nach einem der Ansprüche 1 bis 8,
**dadurch gekennzeichnet, dass** die Halteseite (8) eine in Längsrichtung offene Seite ist, wobei die Halteschiene somit allgemein die Form eines C-förmigen Profils aufweist, in die jede Seitenfläche (4) an ihrem freien Ende mit wenigstens 90° zur Innenseite des Profils umgebogen ist und dabei einen Rand (6) bildet.

10. Halteschiene nach Anspruch 9,
**dadurch gekennzeichnet, dass** die Halteseite (8) beidseits der Längsöffnung ein kanalförmiges Profil mit einer Rückwand zwischen zwei Seitenteilen aufweist, dass jedes kanalförmige Profil so genannte Halteaussparungen (22) aufweist, die sich in Längsrichtung des kanalförmigen Profils mit einem gleichmäßigen Abstand wiederholen, wobei die Halteaussparungen (22) beidseits der Kanten der Rückwand, das heißt sowohl in der Rückwand als auch zum Teil in den beiden Seitenteilen, solchermaßen ausgeschnitten sind, dass in der Rückwand lotrecht zu jeder Halteaussparung (22) eine einzige Zunge (24) ausgebildet ist.

11. Halteschiene nach einem der Ansprüche 1 bis 10,
**dadurch gekennzeichnet, dass** die Befestigungsseite (2) Befestigungslöcher (34) aufweist.

12. Einheit, gebildet aus wenigstens zwei Halteschienen nach einem der Ansprüche 1 bis 11, wobei die Haken (12) einer Halteschiene in entsprechende Schlitze (14) der anderen Halteschiene eingeführt sind.

## Claims

1. A support rail having an elongate shape defining a longitudinal direction and being substantially rectangular in section, with a first so-called support face (8), a second so-called mounting face (2) opposite said first face, two side faces (4) joining the support face (8) to the mounting face (2), and two end faces (10),
**characterised in that** each side face (4) has, at at least one end face (10), at least one hook (12) extending towards the outside of the rail in the longitudinal direction of the rail, thereby forming a pair of hooks (12),
**in that** at least one face selected from the support face (8), the mounting face (2) and the side faces (4) has at least one pair of slots (14) dimensioned and disposed such that they are able to cooperate with a pair of hooks (12) of a similar support rail.

2. A support rail according to claim 1, **characterised in that** the hooks (12) are L-shaped and are connected to the corresponding side face (4) by a tab bent such that the L-shaped hook (12) extends in a plane substantially parallel to the side faces (4) but offset towards the inside of the support rail.

3. A support rail according to claim 1, **characterised in that** the hooks (12) are L-shaped and are joined to the corresponding side face (4), being disposed in a plane inclined relative to the corresponding side face (4) so as to converge towards the other side face (4).

4. A support rail according to one of claims 1 to 3, **characterised in that** each end face (10) has at least one pair of hooks (12).

5. A support rail according to one of claims 1 to 4, **characterised in that** the rail is substantially square in section.

6. A support rail according to claim 5, **characterised in that** a slot (14) extending along one face is combined with a slot (14) extending along a neighbouring face so as to form just one single slot (14) straddling an optionally rounded connecting edge between said faces.

7. A support rail according to one of claims 1 to 6, **characterised in that** each side face (4) has between the two end faces (10) at least one cut-out (16), to at least one edge (18) of which is attached a hook (12) similar to a hook (12) located on the same side face at an end face.

8. A support rail according to claim 7, **characterised in that** each side face comprises a plurality of cut-outs (16), to at least one edge (18) of each of which is attached a hook (12), **in that** the support rail has pairs of slots (14) distributed longitudinally at a first pitch, and **in that** the above-mentioned cut-outs (16) are distributed longitudinally at a second pitch, which is a multiple of the first pitch.

9. A support rail according to one of claims 1 to 8, **characterised in that** the support face (8) is a longitudinally open face, the support rail thus taking the general form of a C-shaped profile element in which each side face (4) is bent by at least 90° at its free end towards the inside of the profile element, so forming a flange (6).

10. A support rail according to claim 9, **characterised in that**, on either side of the longitudinal opening, the support face (8) has a channel profile with a rear wall between two wings and **in that** each channel profile has so-called supporting notches (22) repeated over the length of the channel profile at a regular pitch, said supporting notches (22) being cut out in such a way as to straddle the edges of the rear wall, that is to say both in the rear wall and partially in the two wings so as to form a single tongue (24) in the rear wall directly above each supporting notch (22).

11. A support rail according to one of claims 1 to 10, **characterised in that** the mounting face (2) has mounting holes (34).

12. An assembly formed of at least two support rails according to one of claims 1 to 11, the hooks (12) of one support rail being inserted into corresponding slots (14) in the other support rail.
